# EUROPÄISCHE PATENTSCHRIFT

(11) **EP 4 203 240 B1**
(45) Veröffentlichungstag und Bekanntmachung des Hinweises auf die Patenterteilung: **11.11.2026**
(21) Anmeldenummer: 22209075.5
(22) Anmeldetag: 23.11.2022
(51) Int. Cl.: H02J 50/00, H02J 50/10, H02J 50/80

(54) **VERFAHREN UND STEUEREINHEIT ZUM BETREIBEN EINER HAUSHALTVORRICHTUNG UND HAUSHALTVORRICHTUNG**
METHOD AND CONTROL UNIT FOR OPERATING A HOUSEHOLD DEVICE AND HOUSEHOLD DEVICE
PROCÉDÉ ET UNITÉ DE COMMANDE POUR FAIRE FONCTIONNER UN APPAREIL MÉNAGER ET APPAREIL MÉNAGER

(30) Priorität: 22.12.2021 BE 202106033
(43) Veröffentlichungstag der Anmeldung: 28.06.2023
(73) Patentinhaber: Miele & Cie. KG, 33332 Gütersloh (DE)
(72) Erfinder: Thomas, Sebastian, 85293 Reichertshausen (DE); Auell, Alexander, 33613 Bielefeld (DE); Gross, Simon, 32257 Bünde (DE)

(56) Entgegenhaltungen:
- EP-A1- 3 524 889
- DE-B3- 102012 101 536

## Beschreibung

Die Erfindung betrifft ein Verfahren und eine Steuereinheit zum Betreiben einer Haushaltvorrichtung sowie eine Haushaltvorrichtung.

Die DE 197 05 779 C1 beschreibt ein Abstellelement für einen elektrischen Verbraucher, wobei das Abstellelement eine Netzanschlussleitung zur Stromversorgung eines Steckkupplungsteils aufweist, das aus einer Oberfläche des Abstellelementes ragt. Dokument EP3524889A1 offenbart ein Haushaltsgerät mit einer induktiven Ladeeinrichtung für ein mobiles Endgerät. Es sind Mittel zur Detektion der Anwesenheit des mobilen Endgeräts im Bereich der Ladeeinrichtung vorgesehen, wobei eine Reaktion des Haushaltsgeräts auf diese Detektion erfolgt. Dokument DE102012101536B3 zeigt ein ähnliches Haushaltsgerät.

Der hier vorgestellte Ansatz stellt sich die Aufgabe, ein verbessertes Verfahren und eine verbesserte Steuereinheit zum Betreiben einer Haushaltvorrichtung sowie eine verbesserte Haushaltvorrichtung zu schaffen.

Erfindungsgemäß wird diese Aufgabe durch ein Verfahren und eine Steuereinheit zum Betreiben einer Haushaltvorrichtung sowie durch eine Haushaltvorrichtung mit den Merkmalen der Hauptansprüche gelöst. Vorteilhafte Ausgestaltungen und Weiterbildungen der Erfindung ergeben sich aus den nachfolgenden Unteransprüchen.

Durch den vorgestellten Ansatz kann zum einen eine Vernetzung von Geräten untereinander verbessert werden, sodass beispielsweise Haushaltgeräte mit mindestens einem mobilen Endgerät bidirektional kommunizieren können. Zum anderen kann erreicht werden, dass mobile Endgeräte unter Verwendung eines Haushaltgeräts induktiv aufgeladen werden können. Vorteilhafterweise kann dadurch eine Anzahl benötigter Steckdosen zum Laden mobiler Endgeräte reduziert werden, sodass vorhandene Steckdosen anstelle zum Laden von mobilen Endgeräten beispielsweise für kabelgeführte Küchengeräte freigehalten werden können. Auch kann erreicht werden, dass beispielsweise eine Arbeitsfläche von stromführenden Kabeln einer externen Ladestation frei bleibt. Zudem kann die Elektronik einer in der Haushaltvorrichtung integrierten Ladeeinrichtung vor äußeren Einflüssen geschützt sein.

Es wird ein Verfahren zum Betreiben einer Haushaltvorrichtung vorgestellt, die ein Haushaltgerät mit einer Ladeschnittstelle und eine mit der Ladeschnittstelle elektrisch verbundene Ladeeinrichtung zum induktiven Laden eines Endgerätes aufweist. Das Verfahren umfasst einen Schritt des Einlesens eines Kontaktsignals über die Ladeschnittstelle oder eine weitere Schnittstelle zu der Ladeeinrichtung, wobei das Kontaktsignal eine bestehende Kopplung des Endgerätes mit der Ladeeinrichtung repräsentiert, und einen Schritt des Bereitstellens eines Ansteuersignals zum Ansteuern einer Gerätefunktion des Haushaltgerätes ansprechend auf das Kontaktsignal.

Das Haushaltgerät kann beispielsweise als ein Küchengerät realisiert sein, wie beispielsweise ein Gargerät, ein Kochfeld oder ein Kühlgerät. Alternativ kann das Haushaltgerät beispielsweise auch als ein Reinigungsgerät ausgeformt sein. Das Endgerät ist vorzugsweise ein mobiles Endgerät. Alternativ oder ergänzend zu den im weiteren beschriebenen Endgeräten kann das Endgerät ein Küchenkleingerät, wie beispielsweise ein Sensorgargeschirr, wie etwa eine Pfanne und/oder ein Kochtopf, sein. Die Ladeeinrichtung kann die Funktionalität einer induktiven Ladestation bereitstellen. Die Ladeeinrichtung kann an einem zum Laden des Endgerätes, beispielsweise eines Smartphones oder eines Tablets, vorgesehenen Ladeabschnitt oder Ladebereich der Haushaltvorrichtung angeordnet sein. Das Endgerät kann vorteilhafterweise durch Auflegen auf den Ladeabschnitt oder durch Platzieren in dem Ladebereich unter Verwendung der Ladeeinrichtung geladen werden. Vorteilhafterweise kann das Kontaktsignal durch Auflegen des Endgerätes auf die Ladeeinrichtung ausgelöst werden. Das Kontaktsignal kann beispielsweise von einem Erfassungssensor bereitgestellt werden, der beispielsweise in oder an der Ladeeinrichtung oder an dem Haushaltgerät angeordnet sein kann. Die Ladeeinrichtung kann ein integraler Bestandteil der Haushaltvorrichtung sein, beispielsweise fest innerhalb der Haushaltvorrichtung verbaut sein. Die Ladeschnittstelle kann als eine elektrische Schnittstelle zur Energieübertragung und optional zur Datenübertragung ausgeführt sein. Somit kann das Endgerät beispielsweise während eines Kochvorgangs für den Nutzer sichtbar platziert und dabei geladen werden. Die Ladeeinrichtung kann dennoch beispielsweise vor Feuchtigkeit, Fettspritzern oder Schmutzpartikeln geschützt positioniert sein. Die Gerätefunktion kann beispielsweise durch einen Nutzer definiert oder ausgewählt werden. Alternativ kann die Gerätefunktion ein Aktivieren des Haushaltgerätes repräsentieren. Die weitere Schnittstelle zwischen dem Haushaltgerät und der Ladeeinrichtung kann eine drahtgebundene oder eine drahtlose Kommunikation zwischen dem Haushaltgerät und der Ladeeinrichtung ermöglichen.

Gemäß einer Ausführungsform kann das Ansteuersignal zum Überführen des Haushaltgerätes aus einem Ruhezustand in einen Betriebszustand, zusätzlich oder alternativ zum Aktivieren einer Beleuchtungseinheit und zusätzlich oder alternativ zum Deaktivieren einer Sicherungsfunktion des Haushaltgerätes bereitgestellt werden. Der Ruhezustand kann beispielsweise auch als Standby-Modus bezeichnet werden, in dem beispielsweise das Haushaltgerät nicht aktiv ist. Die Sicherungsfunktion kann beispielsweise als Kindersicherung realisiert sein, die vorteilhafterweise nur dann deaktiviert werden kann, wenn das Endgerät mit der Ladeeinrichtung gekoppelt ist. Durch die Sicherungsfunktion kann vorteilhafterweise verhindert werden, dass das Haushaltgerät irrtümlich aktiviert wird und dadurch beispielsweise eine Brandgefahr steigt. Die Beleuchtungseinheit kann beispielsweise als eine Leuchtdiode (LED) realisiert sein, die beispielsweise anzeigen kann, wenn ein Stromkreis geschlossen ist, beziehungsweise wenn das Endgerät erfolgreich mit der Ladeeinrichtung gekoppelt ist und dadurch geladen werden kann. Vorteilhafterweise kann zusätzlich oder alternativ eine Applikation (App) auf dem Endgerät gestartet werden und beispielsweise ein voreingestelltes oder gespeichertes Rezept aufgerufen werden. Beispielsweise kann das Ansteuersignal an eine Ausgabeeinrichtung des Haushaltgerätes, beispielsweise ein Lautsprecher, bereitgestellt werden, um beispielsweise ein akustisches Signal bereitzustellen, das beispielsweise einen Ladestatus des Endgerätes oder alternativ einen Betriebsstatus des Haushaltgerätes anzeigen kann.

Weiterhin kann das Kontaktsignal Identitätsdaten zum Identifizieren des Endgerätes umfassen, wobei im Schritt des Bereitstellens das Ansteuersignal unter Verwendung der Identitätsdaten bereitgestellt werden kann. Die Identitätsdaten können beispielsweise gerätespezifische Daten sein, wie eine Seriennummer, Modellnummer, Mac-Adresse oder anderweitige Daten, durch die das Endgerät identifiziert werden kann. Vorteilhafterweise können die Identitätsdaten überprüft werden, und im Anschluss das Ansteuersignal bereitgestellt werden, wenn die Identitätsdaten bekannt sind. Beispielsweise können die Identitätsdaten vorteilhafterweise mit in dem Haushaltgerät oder einer externen Speichereinrichtung hinterlegten Identitätsdaten verglichen werden, um ein Vergleichsergebnis zu erhalten. Zeigt das Vergleichsergebnis eine Übereinstimmung an, kann das Ansteuersignal bereitgestellt werden.

Das Verfahren kann einen Schritt des Einlesens eines Steuereingabesignals über die Schnittstelle zu der Ladeeinrichtung umfassen, wobei das Steuereingabesignal eine über das Endgerät getätigte Steuereingabe repräsentieren kann. Das Ansteuersignal kann unter Verwendung des Steuereingabesignals bereitgestellt werden. Vorteilhafterweise kann ein Nutzer die Steuereingabe mittels einer Taste oder beispielsweise mittels Sprachsteuerung über das Endgerät tätigen.

Gemäß einer Ausführungsform kann das Verfahren einen Schritt des Ausgebens eines Zustandssignals über eine Schnittstelle an das Endgerät ansprechend auf das Kontaktsignal umfassen, um eine Anzeige eines Zustands des Haushaltgeräts mittels des Endgeräts bewirken zu können. Die Anzeige des Zustands des Haushaltgerätes kann vorteilhafterweise als Reaktion des Haushaltgerätes auf das Kontaktsignal erfolgen, um vorteilhafterweise den Nutzer darüber informieren zu können, dass das Haushaltgerät betriebsbereit ist.

Im Schritt des Bereitstellens wird das Ansteuersignal erfindungsgemäß an eine Schnittstelle zu einer Anzeigeeinheit des Haushaltgerätes bereitgestellt, wobei das Ansteuersignal eine Eingabeaufforderung an einen Nutzer repräsentiert. Die Anzeigeeinheit kann vorteilhafterweise als ein Display, wahlweise auch als ein berührungsempfindliches Display ausgeformt sein. Die Eingabeaufforderung kann beispielsweise eine Bestätigung durch den Nutzer anfordern, sodass das Haushaltgerät beispielsweise nicht fälschlicherweise aktiviert wird. Das bedeutet, dass das mobile Endgerät als Schlüssel für das Haushaltgerät verwendet und somit eine Sprachbedienung ermöglicht werden kann. Vorteilhafterweise kann dadurch ein Sicherheitsaspekt verbessert werden. Der Schlüssel kann alternativ auch als ein abnehmbarer Knebel sein realisiert sein.

Ferner kann das Verfahren einen Schritt des Empfangens eines Bestätigungssignals über eine Schnittstelle zu einer Eingabeeinrichtung des Haushaltgerätes ansprechend auf die Eingabeaufforderung umfassen, wobei das Bestätigungssignal eine getätigte Eingabe des Nutzers repräsentieren kann. Vorteilhafterweise kann dadurch sichergestellt werden, dass der Nutzer den Betrieb des Haushaltgerätes wünscht und ein versehentliches Einschalten des Haushaltgerätes kann ausgeschlossen werden. Dadurch kann vorteilhafterweise ein Sicherheitsaspekt verwirklicht werden und zeitgleich eine Bedienung des Haushaltgerätes simpel gehalten werden.

Das Verfahren kann einen Schritt des Übertragens einer Ladeenergie zum induktiven Laden des Endgeräts über die Ladeschnittstelle ansprechend auf das Kontaktsignal umfassen. Vorteilhafterweise kann dadurch erreicht werden, dass dem Nutzer beispielsweise zu jeder Zeit während eines Kochprozesses ein auf dem Endgerät angezeigtes Rezept vorliegt und eine Batterie des Endgerätes vorteilhafterweise nicht während des Kochprozesses leerläuft. Vorteilhafterweise ist zum Laden des Endgerätes keine zusätzliche Stromquelle nötig

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Es wird außerdem eine Haushaltvorrichtung vorgestellt, die ein Haushaltgerät mit einer Ladeschnittstelle, eine Ladeeinrichtung zum induktiven Laden eines mobilen Endgerätes, die elektrisch mit der Ladeschnittstelle verbunden oder verbindbar ist, und eine Steuereinheit in einer zuvor genannten Variante vorgestellt.

Das Haushaltgerät kann beispielsweise als ein Küchengerät, vorteilhafterweise als ein Kochfeld ausgeformt sein. Vorteilhafterweise kann das Haushaltgerät als ein Einbaugerät ausgeführt sein. Lediglich optional kann das Haushaltgerät eine Anzeigeeinheit zum Anzeigen eines Bildes und zusätzlich oder alternativ eines Symbols aufweisen. Die Anzeigeeinheit kann ausgebildet sein, um mindestens eine Geräteinformation des mit der Ladeeinrichtung gekoppelten Endgerätes anzuzeigen. Die Ladeeinrichtung kann vorteilhafterweise als eine Ladestation realisiert sein, die durch Auflegen des Endgerätes ebendieses aufladen kann. Beispielsweise kann die Ladeeinrichtung mittels eines Verbindungskabels mit dem Haushaltgerät elektrisch verbunden sein. Die Ladeeinrichtung kann weiterhin in einem verfahrbaren Einbauelement, wie beispielsweise eine Schublade für einen Einbauschrank, modular angeordnet sein, das beispielsweise als Teil der Haushaltvorrichtung realisiert sein kann. Weiterhin kann die Haushaltvorrichtung eine Arbeitsplatte aufweisen, in oder an der die Ladeeinrichtung und zusätzlich oder alternativ das Haushaltgerät angeordnet sein kann. Die Ladeeinrichtung kann beispielsweise in der Arbeitsplatte integriert sein oder flächig an der Arbeitsplatte angeordnet sein. Beispielsweise kann das Endgerät geladen werden, wenn es auf der Arbeitsplatte abgelegt ist. Das Haushaltgerät kann als Kochfeld beispielsweise in die Arbeitsplatte eingelassen sein.

Auch wenn der beschriebene Ansatz anhand eines Haushaltgerätes beschrieben wird, kann der hier beschriebene Ansatz entsprechend im Zusammenhang mit einem gewerblichen oder professionellen Gerät, beispielsweise im Gastronomiebereich eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Haushaltvorrichtung gemäß einem Ausführungsbeispiel;
- Figur 2: eine schematische Darstellung eines Ausführungsbeispiels einer Haushaltvorrichtung;
- Figur 3: eine schematische Darstellung eines Ausführungsbeispiels einer Haushaltvorrichtung;
- Figur 4: eine schematische Seitendarstellung eines Ausführungsbeispiels einer Haushaltvorrichtung;
- Figur 5: eine schematische Darstellung eines Ausführungsbeispiels einer Haushaltvorrichtung;
- Figur 6: eine schematische Schnittdarstellung eines Ausführungsbeispiels einer Haushaltvorrichtung
- Figur 7: ein Ablaufdiagramm eines Verfahrens gemäß einem Ausführungsbeispiel zum Betreiben einer Haushaltvorrichtung; und
- Figur 8: ein Blockschaltbild einer Steuereinheit gemäß einem Ausführungsbeispiel für eine Haushaltvorrichtung.

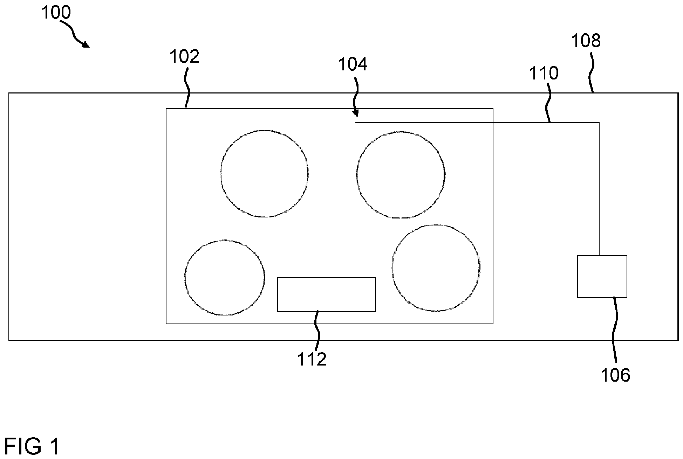

Figur 1 zeigt eine schematische Darstellung einer Haushaltvorrichtung 100 gemäß einem Ausführungsbeispiel. Die Haushaltvorrichtung 100 weist dabei ein Haushaltgerät 102 mit einer Ladeschnittstelle 104 und eine Ladeeinrichtung 106 zum induktiven Laden eines mobilen Endgerätes auf. In dem in Figur 1 gezeigten betriebsbereiten Zustand der Haushaltvorrichtung 100 ist die Ladeeinrichtung 106 elektrisch mit der Ladeschnittstelle 104 verbunden, beispielsweise festverdrahtet. Die Ladeeinrichtung 106 ermöglicht als integraler Bestandteil der Haushaltvorrichtung 100 das Aufladen eines mobilen Endgeräts, wenn das mobile Endgerät im Bereich der Ladeeinrichtung 106 platziert wird. Beispielsweise kann das Aufladen erfolgen, während das Haushaltgerät 102 in Betrieb ist. Die Haushaltvorrichtung 100 ist beispielsweise als Teil einer Küchenzeile realisiert, wie sie in Haushalten üblich ist. Beispielsweise ist das Haushaltgerät 102 als ein Einbaugerät ausgeführt, hier beispielhaft als ein Kochfeld mit vier Kochzonen.

Die Haushaltvorrichtung 100 weist eine Steuereinheit auf, die in einer der nachfolgenden Figuren näher beschrieben ist. Die Steuereinheit ist dabei ausgebildet, um ein Verfahren zum Betreiben der Haushaltvorrichtung 100 anzusteuern und/oder durchzuführen und ist beispielsweise als Steuereinheit des Haushaltgerätes 102 ausgeformt. Das Verfahren wird ebenfalls in einer der nachfolgenden Figuren näher beschrieben. Insbesondere ist das Haushaltgerät 102 ausgebildet, um ein Kontaktsignal über die Ladeschnittstelle 104 oder eine weitere Schnittstelle zu der Ladeeinrichtung 106 einzulesen, das eine bestehende Kopplung des Endgerätes mit der Ladeeinrichtung 106 repräsentiert. Das Haushaltgerät 102 ist ausgebildet, um das Kontaktsignal zu verwenden, um eine Gerätefunktion des Haushaltgerätes 102 anzusteuern.

Die Ladeeinrichtung 106 stellt ein Zubehörteil für die Haushaltvorrichtung 100 dar und ermöglicht ein autarkes induktives Laden von Endgeräten. Somit kann eine Ladefunktion auch in ein Küchenmöbel integriert sein, dass von der Haushaltvorrichtung 100 umfasst ist oder in das die Haushaltvorrichtung 100 integriert ist. Durch eine geeignete Anordnung der Ladeeinrichtung 106, die auch als Ladestation oder Lademodul bezeichnet werden kann, ist dies für einen Nutzer nicht optisch zu erkennen und voll in die Haushaltvorrichtung 100 und somit beispielsweise in eine Küche integriert. Die Ladeeinrichtung 106 stellt eine oder mehrere Ladezonen zum induktiven Laden eines oder mehrerer mobiler Endgeräte bereit. Gemäß einem Ausführungsbeispiel ist das Haushaltgerät 102 ausgebildet, um ein optisches und/oder akustisches Signal zum Anzeigen des Füllstands eines Akkus des Endgerätes anzuzeigen. Dazu wird eine Kommunikationsschnittstelle verwendet, die Teil der Ladeschnittstelle 104 sein kann oder als eine weitere Schnittstelle zwischen dem Haushaltgerät 102 und der Ladeeinrichtung 106 oder dem mobilen Endgerät ausgeführt ist. Vorteilhafterweise werden bauseitseitig für die Ladeeinrichtung 106 keine weiteren Stromquellen oder Kabelführungen zu einer 230V Steckdose benötigt, da die Energieversorgung der Ladeeinrichtung 106 über das Haushaltgerät 102 erfolgt.

Beispielsweise ist das Haushaltgerät 102 ausgebildet, um ansprechend auf das Kontaktsignal, das eine Auflage des mobilen Endgeräts auf einen zum Laden durch die Ladeeinrichtung 106 vorgesehene Ladezone anzeigt, zumindest eine Funktion zu starten. Beispielsweise kann eine Beleuchtung des Haushaltgeräts 102 aktiviert oder das Haushaltgerät 102 kann aus einem Ruhezustand geholt werden. Auch kann die Ladeeinrichtung 106 als ein sicherheitsrelevantes Zusatzsystem wie ein Schlüssel verwendet werden. Optional kann unter Verwendung der Ladeeinrichtung 106 eine Ein- und Ausschalttaste des Haushaltgeräts 102 umgangen werden.

Gemäß einem Ausführungsbeispiel werden von dem Haushaltgerät 102 durchzuführende Aktionen über eine Standard-Verbindung zwischen dem Haushaltgerät 102 und dem mobilen Gerät gestartet. Dabei erfolgt eine Auswahl durch Spracheingabe oder manueller Eingabe am Endgerät. Vorteilhafterweise kann eine entsprechende Aktion bei Erkennung des Endgeräts über Ladeeinrichtung 106 gestartet werden, ohne das eine separate Bestätigung durch einen Nutzer erforderlich ist.

Gemäß einem Ausführungsbeispiel wird eine Sprachsteuerung des mobilen Endgeräts oder werden über das mobile Endgerät eingegebene Sprachbefehle genutzt, um das Haushaltgerät 102 zu steuern.

Die Auflage des mobilen Endgerätes kann als Kindersicherung genutzt werden. So wird das Haushaltgerät 102 erst bedienbar, wenn das "passende" mobile Endgerät aufliegt. Gemäß einem Ausführungsbeispiel sind Funktionen des Haushaltgeräts 102 gerätespezifisch oder anwenderspezifisch eingeschränkt.

Gemäß einem Ausführungsbeispiel werden Reaktionen des mobilen Endgerätes über das Haushaltsgerät 102 angezeigt und umgekehrt. Dadurch kann eine sogenannte "Screen Mirror" Funktionalität realisiert werden. Von kompatiblen Geräten können die Akkuladestände ausgelesen und im Prozess verarbeitet werden, beispielsweise können Hinweise, wie Akkuladestand zu niedrig, unter Verwendung des Haushaltgeräts 102 ausgegeben werden.

Die Ladeeinrichtung 106 umfasst gemäß einem Ausführungsbeispiel einen integrierten Sensor. Dieser Sensor erkennt ob ein mobiles Endgerät aufliegt. Die Steuerung des Haushaltgeräts 102 ist gemäß einem Ausführungsbeispiel ausgebildet, um mit einer Information des Sensors, die beispielsweise über das Kontaktsignal übertragen wird, Funktionen freizugeben. Vorteilhafterweise kann die Ladeeinrichtung 106 über die als definierten Schnittstelle ausgeführte Ladeschnittstelle 104 an das Haushaltgerät 102 angeschlossen werden. Die Ladeeinrichtung 106 wird dabei mit Energie und Daten von und zum Haushaltgerät 102 versorgt.

Gemäß einem Ausführungsbeispiel ist die Ladeeinrichtung 106 von einem Küchenbauer oder Planer frei und unsichtbar in der Haushaltvorrichtung 100 positionierbar. Die Ladeeinrichtung 106 kann dabei ein Teil bekannter Küchenplanerprogramme sind und direkt in der Küchenplanung mitberücksichtigt werden. Die Kabelführung zwischen Haushaltgerät 102 und der als induktive Ladestation dienenden Ladeeinrichtung 106 ist im montierten Zustand der Ladeeinrichtung 106 gemäß einem Ausführungsbeispiel für einen Nutzer nicht sichtbar verlegt. Eine Arbeitsfläche kann somit frei von stromführenden Kabeln gehalten werden. Zudem ist eine Elektronik der Ladeeinrichtung 106 von jeglichen äußeren Einflüssen, wie Feuchtigkeit oder Fett maximal geschützt anordenbar.

Eine der Ladeeinrichtung 106 zugeordnete Ladezone ist optional durch Aufdrucke, Fräsungen oder Kennzeichnungen erkennbar gestaltet. Wenn sich ein mobiles Endgerät der Ladezone nähert wird dies optional visuell oder akustisch bestätigt. Vorteilhafterweise kann eine entsprechende Ladezone ergonomisch optimiert angeordnet sein. Das sich daraus ergebende Ladesystem mit Sensor bieten dem Nutzer smarte Funktionen an und erweitert den Einsatz eines bekannten induktiven Ladesystems, beispielsweise durch sicherheitsrelevante Funktionen.

Gemäß einem Ausführungsbeispiel weist die Haushaltvorrichtung 100 optional eine Arbeitsplatte 108 auf. Beispielhaft ist das Haushaltgerät 102 in die Arbeitsplatte 108 eingelassen. Die Ladeeinrichtung 106 ist dabei an der Arbeitsplatte 108 angeordnet, um das Laden des Endgerätes zu ermöglichen, wenn dieses auf der Arbeitsplatte 108 abgelegt ist.

Beispielsweise ist die Ladeeinrichtung 106 dabei an einer für einen Nutzer nicht sichtbaren Rückseite der Arbeitsplatte 108 fest montiert. Alternativ ist die Ladeeinrichtung 106 beispielsweise in die Arbeitsplatte 108 integriert. Gemäß einem Ausführungsbeispiel ist die Ladeeinrichtung 106 für einen Nutzer nicht handbar, also beispielsweise nicht verschiebbar, angeordnet.

Das Haushaltgerät 102 ist ausgebildet, um eine Ladeenergie zum Laden des Endgeräts an die Ladeschnittstelle 104 bereitzustellen. Gemäß einem Ausführungsbeispiel weist die Haushaltvorrichtung 100 ein Verbindungskabel 110 auf, das verwendet wird, um die Ladeeinrichtung 106 mit dem Haushaltgerät 102 elektrisch zu verbinden. Das Verbindungskabel 110 ist beispielsweise während der Montage der Haushaltvorrichtung 100 lösbar oder unlösbar mit der Ladeschnittstelle 104 verbunden worden.

Das Haushaltgerät 102 weist gemäß einem Ausführungsbeispiel eine Anzeigeeinheit 112 auf, die ausgebildet ist, um ein Bild und/oder ein Symbol anzuzeigen. Beispielsweise ist die Anzeigeeinheit 112 als ein Display realisiert. Optional weist die Anzeigeeinheit 112 eine Eingabeschnittstelle auf, sodass die Anzeigeeinheit 112 beispielsweise auch als berührungsempfindliches Display ausgeformt sein kann. Die Anzeigeeinheit 112 ist insbesondere ausgebildet, um mindestens eine Geräteinformation des mit der Ladeeinrichtung 106 gekoppelten Endgerätes anzuzeigen. Die Geräteinformation repräsentiert beispielsweise einen Ladestatus des Endgerätes und/oder einen Timer, sodass ein Nutzer bezüglich ebendieser Geräteinformation über die Anzeigeeinheit 112 des Haushaltgeräts 102 informiert werden kann.

Die Haushaltvorrichtung 100 stellt ein autarkes induktives Ladesystem für mobile Endgeräte bereit. Dies ist vorteilhaft, da eine Anzahl von mobilen Endgeräten mit autonomer Energieversorgung stetig steigt. Aktuell gibt es alleine in Deutschland weit mehr als 100.000.000 Mobiltelefone, Tablets und Smartwatches. Alle diese Geräte werden regelmäßig mit Energie für ihren Betrieb aufgeladen. Dieses erfordert üblicherweise eine 230V Steckdose und ein individuelles entsprechendes Ladekabel. Somit ist es durchaus in einer 4-köpfigen Familie möglich, bis zu 10 Endgeräte dieser Art zu besitzen, sodass eine entsprechende Anzahl von Steckdosen erforderlich ist und ein "Kabelsalat" vorprogrammiert ist. Der zentrale Lebensraum der Küche rückt zudem immer mehr in den Vordergrund und insbesondere hier kommt es häufig zur beschriebenen Situation, da beispielsweise das als Handy bezeichnete Smartphone immer häufiger in den Kochprozess einbezogen wird, indem beispielsweise kochbezogene Applikationen (Apps) zum Bereitstellen von Rezepten, cookAssist oder geführtes Kochen und/oder eine Timerfunktion verwendet werden, oder da beispielsweise Social Networking während des Kochens an Bedeutung gewinnt.

Vor diesem Hintergrund ist die auch als Ladesystem bezeichnete Ladeeinrichtung 106 direkt in Küchengeräte verbaubar, in Figur 1 verbaut dargestellt, und somit als ein interner Teil der Haushaltvorrichtung 100 ausgeformt. Die Ladeeinrichtung 106 ist beispielsweise als induktive Ladeeinrichtung 106 oder beispielsweise als ein Zubehörteil für Haushaltgeräte 102 realisiert oder realisierbar, das ein autarkes induktives Laden von Endgeräten ermöglicht. Zum induktiven Laden weist die Ladeeinrichtung 106 gemäß einem Ausführungsbeispiel zumindest eine Spule auf.

Durch den vorgestellten Ansatz und der entsprechenden Positionierung der Ladeeinrichtung 106, die beispielsweise in, an oder unter der Arbeitsplatte 108 oder beispielsweise in einen Küchenschrank integriert ist, wird erreicht, dass die Arbeitsfläche der Arbeitsplatte 108 frei bleibt. Des Weiteren ist die Ladeeinrichtung 106 beispielsweise optisch nicht zu erkennen und vollständig in die Küche integriert oder integrierbar. Ein optisches und/oder akustisches Signal zum Ladestands des Endgerätes erfolgt beispielsweise über das Haushaltgerät 102, das auch als Einbaugerät bezeichnet wird. Somit liegt die Ladeschnittstelle 104, die beispielsweise auch als Kommunikationsschnittstelle bezeichnet wird, über das Haushaltgerät 102 vor.

Die Ladeeinrichtung 106 wird mit der definierten Ladeschnittstelle 104 an das Haushaltgerät 102 als Einbaugerät angeschlossen. Die Ladeeinrichtung 106 wird mit Energie und/oder Daten von und zu dem Haushaltgerät 102 versorgt. Beispielsweise ist eine Kabelführung zwischen Haushaltgerät 102 und induktiver Ladeeinrichtung 106 für den Nutzer nicht sichtbar. Das bedeutet, dass das Verbindungskabel 110 derart angeordnet ist, sodass es in verbautem Zustand der Haushaltvorrichtung 100 dem Nutzer abgewandt ist. Die Ladeeinrichtung 106 ist weiterhin frei positionierbar und nimmt keinen aktiven Verwendungsplatz des Haushaltgerätes 102 ein.

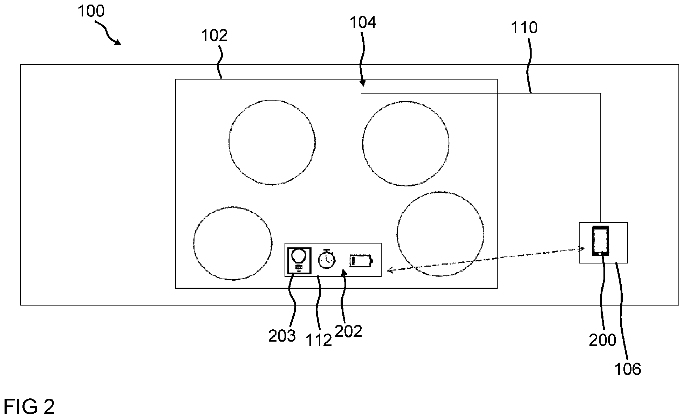

Figur 2 zeigt eine schematische Darstellung eines Ausführungsbeispiels einer Haushaltvorrichtung 100. Die Haushaltvorrichtung 100 ähnelt beispielsweise der in Figur 1 beschriebenen Haushaltvorrichtung 100. Gemäß diesem Ausführungsbeispiel ist zusätzlich ein mobiles Endgerät 200, beispielsweise ein Smartphone, dargestellt, das mit der Ladeeinrichtung 106 gekoppelt ist. Alternativ ist das Endgerät 200 beispielsweise auch als ein Tablet, eine Smartwatch oder als ein anderes mobiles Gerät realisierbar. Weiterhin zeigt die Anzeigeeinheit 112 gemäß diesem Ausführungsbeispiel mindestens eine Geräteinformation 202 an, die von dem Endgerät 200 zur Anzeige über die Anzeigeeinheit 112 bereitgestellt wurde. Die Geräteinformation 202 repräsentiert beispielsweise einen Ladestatus des Endgeräts 200 oder einen Timer. Alternativ zeigt die Anzeigeeinheit 112 beispielsweise eine Statusleuchte an, die mit dem Ladestatus gekoppelt ist und beispielsweise eine elektrische Verbindung zu dem Endgerät 200 repräsentiert.

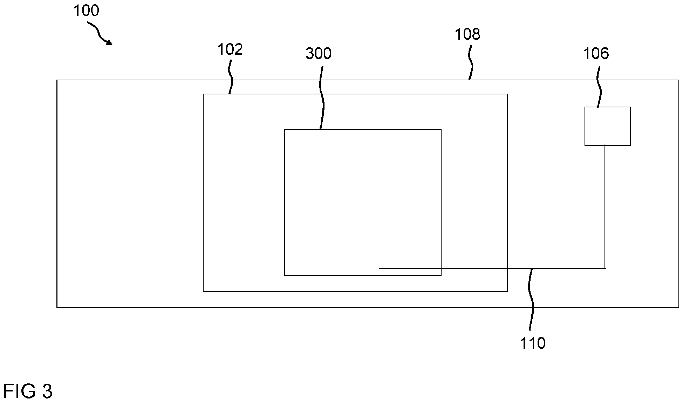

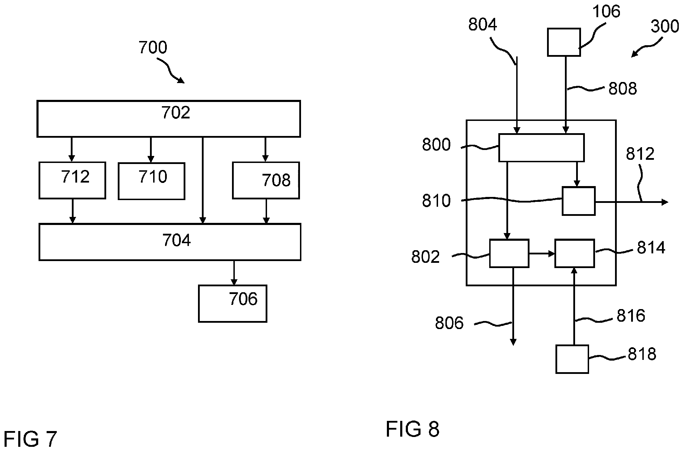

Beispielsweise wird ein die Geräteinformation 202 umfassendes Signal über die Ladeschnittstelle 104 oder alternativ drahtlos zwischen Endgerät 200 und Haushaltgerät 102 Figur 3 zeigt eine schematische Darstellung eines Ausführungsbeispiels einer Haushaltvorrichtung 100. Die Haushaltvorrichtung 100 entspricht oder ähnelt beispielsweise der in einer der Figuren 1 bis 2 beschriebenen Haushaltvorrichtung 100. Gemäß diesem Ausführungsbeispiel ist lediglich eine Unterseite der Haushaltvorrichtung 100 dargestellt, die in einem verbauten Zustand der Haushaltvorrichtung 100 dem Nutzer abgewandt angeordnet ist. Die Haushaltvorrichtung 100, genauer gesagt das Haushaltgerät 102 weist beispielsweise eine Elektronikeinrichtung 300 auf, die mit der Ladeeinrichtung 106 unter Verwendung des Verbindungskabels 110 gekoppelt ist. Die Elektronikeinrichtung 300 ist gemäß einem Ausführungsbeispiel ausgebildet, um eine Funktion des Haushaltgeräts 102 zu steuern, beispielsweise Heizeinrichtungen des Hausaltgeräts 102 zu bestromen. Die Steuereinheit 300 ist beispielsweise ausgebildet, um ein Verfahren zum Betreiben der Haushaltvorrichtung 100 anzusteuern oder durchzuführen, wie es in Figur 7 näher beschrieben ist.

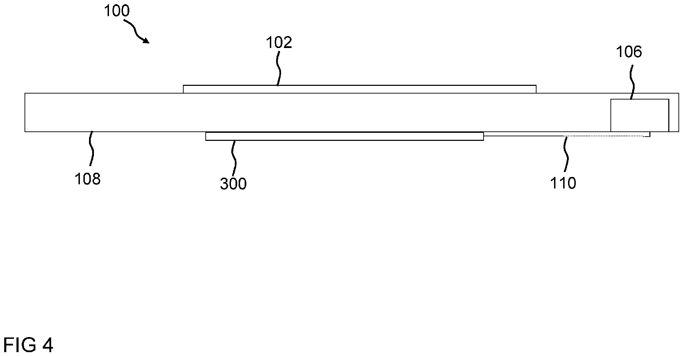

Figur 4 zeigt eine schematische Seitendarstellung eines Ausführungsbeispiels einer Haushaltvorrichtung 100. Die in Figur 4 dargestellte Haushaltvorrichtung 100 entspricht beispielsweise der in einer der Figuren 1 bis 3 beschriebenen Haushaltvorrichtung 100. Gemäß diesem Ausführungsbeispiel ist das Haushaltgerät 102 als Kochfeld ausgeformt, das an der Arbeitsplatte 108 angeordnet oder in die Arbeitsplatte 108 eingelassen ist. Gemäß diesem Ausführungsbeispiel ist die Ladeeinrichtung 106 in eine Aussparung der Arbeitsplatte 108 integriert und rückseitig der Arbeitsplatte 108 mit dem Haushaltgerät 102, genauer gesagt mit der Elektronikeinrichtung 300 des Haushaltgeräts 102 elektrisch unter Verwendung des Verbindungskabels 110 verbunden. Die Elektronikeinrichtung 300 ist beispielsweise als ein Generator oder als eine Steuereinheit des Haushaltgeräts 102 ausgeführt.

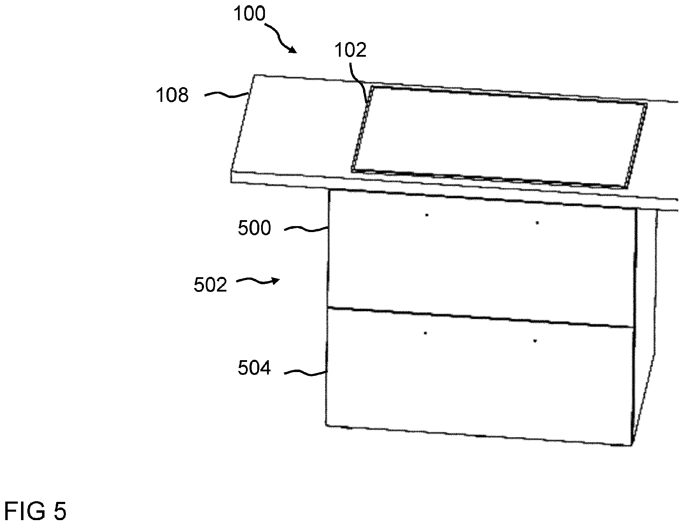

Figur 5 zeigt eine schematische Darstellung eines Ausführungsbeispiels einer Haushaltvorrichtung 100. Die Haushaltvorrichtung 100 entspricht oder ähnelt beispielsweise der in einer der Figuren 1 bis 4 beschriebenen Haushaltvorrichtung 100. Gemäß diesem Ausführungsbeispiel weist die Haushaltvorrichtung 100 ein Einbauelement 500 auf, das beispielsweise verfahrbar als eine Schublade ausgeformt ist. Die Ladeeinrichtung ist gemäß diesem Ausführungsbeispiel in dem Einbauelement 500 modular angeordnet, sodass beispielsweise Abmessungen oder Formen des Einbauelements 500 unterschiedlich realisierbar sind. Das Einbauelement 500 ist gemäß diesem Ausführungsbeispiel als Teil eines Küchenmoduls 502 realisiert, das zusätzlich zu dem Einbauelement 500 ein weiteres Einbauelement 504 aufweist. Das Küchenmodul 502 ist dabei als ein Einbauschrank realisiert.

Optional ist eine weitere Ladeeinrichtung, wie anhand der vorangegangenen Figuren beschrieben, an der Arbeitsplatte 108 angeordnet.

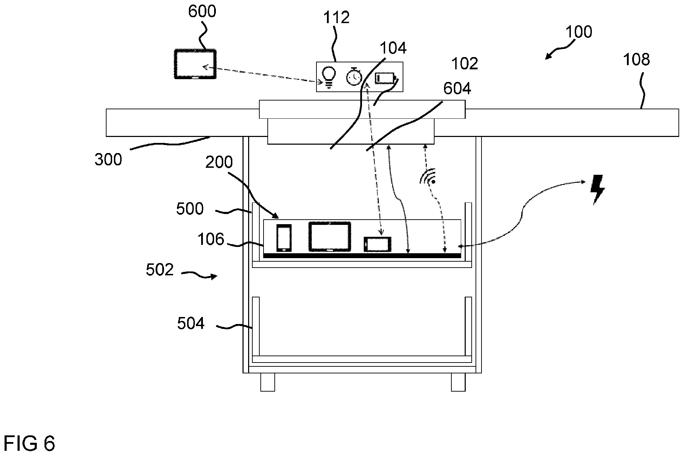

Figur 6 zeigt eine schematische Schnittdarstellung eines Ausführungsbeispiels einer Haushaltvorrichtung 100. Die Haushaltvorrichtung 100 entspricht oder ähnelt beispielsweise der in einer der Figuren 1 bis 5 beschriebenen Haushaltvorrichtung 100, insbesondere der in Figur 5 beschriebenen Haushaltvorrichtung. Gemäß diesem Ausführungsbeispiel ist die Haushaltvorrichtung 100 in verbautem Zustand dargestellt. Die Ladeeinrichtung 106 ist mit der Elektronikeinrichtung 300 des Haushaltgeräts 102 beispielsweise unter Verwendung des Verbindungskabels 110 und der Ladeschnittstelle 104 elektrisch verbunden, sodass das mindestens eine mobile Endgerät 200 elektrisch mittels Induktion aufgeladen werden kann.

Optional weist die Ladeeinrichtung 106 gemäß einem Ausführungsbeispiel solche Abmessungen auf, dass eine Mehrzahl von mobilen Endgeräten 200 zeitgleich unter Verwendung der Ladeeinrichtung 106 geladen werden können. Beispielhaft ist die Ladeeinrichtung 106 passgenau oder annähernd passgenau in dem Einbauelement 500 schubladenartig angeordnet.

Das Haushaltgerät 102 weist optional die Anzeigeeinheit 112 auf, die gemäß diesem Ausführungsbeispiel lediglich aus Darstellungszwecken oberhalb des Haushaltgeräts 102 dargestellt ist und wie in Figur 5 beschrieben flächig an dem Haushaltgerät 102 angeordnet oder in das Haushaltgerät 102 integriert sein kann.

Lediglich optional ist die Ladeeinrichtung 106 drahtlos über eine weitere Schnittstelle 604 des Haushaltgeräts 102 mit der Elektronikeinrichtung 300 verbunden, beispielsweise unter Verwendung eines W-LANs. Gemäß einem Ausführungsbeispiel kann das Endgerät oder können die Endgeräte 200 drahtlos mit der dem Haushaltgerät 102 kommunizieren, wobei entsprechende drahtlos übertragene Informationen unter Verwendung der Anzeigeeinheit 112 angezeigt werden können. Beispielsweise kann mindestens eine zumindest eines der Endgeräte 200 betreffende Geräteinformation 202 an das Haushaltgerät 102 bereitgestellt und unter Verwendung der Anzeigeeinheit 112 dargestellt werden.

Die Anzeigeeinheit 112 oder das Haushaltgerät 102 ist lediglich optional mit mindestens einem weiteren Gerät 610 unter Verwendung einer Drahtlosverbindung koppelbar, sodass die auf der Anzeigeeinheit 112 angezeigten Geräteinformationen 202 beispielsweise auf das weitere Gerät 610 übertragen werden können, umschaltbar und/oder steuerbar sind.

Figur 7 zeigt ein Ablaufdiagramm eines Verfahrens 700 gemäß einem Ausführungsbeispiel zum Betreiben einer Haushaltvorrichtung. Das Verfahren 700 wird beispielsweise für eine Haushaltvorrichtung angesteuert oder durchgeführt, wie sie in einer der Figuren 1 bis 6 beschrieben wurde.

Das Verfahren 700 umfasst einen Schritt 702 des Einlesens und einen Schritt 704 des Bereitstellens. Im Schritt 702 des Einlesens wird ein Kontaktsignal über eine Schnittstelle zu der Ladeeinrichtung eingelesen, das lediglich optional von einer Erfassungseinrichtung bereitgestellt wurde. Das Kontaktsignal repräsentiert eine bestehende Kopplung des Endgerätes mit der Ladeeinrichtung. Im Schritt 704 des Bereitstellens wird ein Ansteuersignal zum Ansteuern einer Gerätefunktion des Haushaltgerätes ansprechend auf das Kontaktsignal bereitgestellt. Das Ansteuersignal wird im Schritt 704 des Bereitstellens beispielsweise bereitgestellt, um das Haushaltgerät aus einem Ruhezustand in einen Betriebszustand zu überführen und/oder um eine Sicherungsfunktion des Haushaltgerätes zu deaktivieren. Beispielsweise wird eine Applikation (App) unter Verwendung des Ansteuersignals gestartet oder ein voreingestelltes Rezept wird aufgerufen. Das Kontaktsignal umfasst beispielsweise Identitätsdaten zum Identifizieren des Endgerätes, sodass das Ansteuersignal im Schritt 704 des Bereitstellens unter Verwendung der Identitätsdaten bereitgestellt wird. Lediglich optional werden die Identitätsdaten überprüft und das Ansteuersignal bereitgestellt, wenn die Identitätsdaten bekannt sind. Weiterhin erfolgt lediglich optional ein Vergleich mit hinterlegten Identitätsdaten, um ein Vergleichsergebnis zu erhalten. Wenn das Vergleichsergebnis eine Übereinstimmung anzeigt, wird das Ansteuersignal bereitgestellt. Erfindungsgemäß repräsentiert das Ansteuersignal eine Eingabeaufforderung an einen Nutzer, die beispielsweise als eine Bestätigung zur Sicherung fungiert. Das Verfahren 700 umfasst lediglich optional einen Schritt 706 des Empfangens eines Bestätigungssignals über eine Schnittstelle zu einer Eingabeeinrichtung des Haushaltgerätes ansprechend auf die Eingabeaufforderung, wobei das Bestätigungssignal eine getätigte Eingabe des Nutzers repräsentiert.

Zudem umfasst das Verfahren 700 gemäß einem Ausführungsbeispiel einen Schritt 708 des Einlesens eines Steuereingabesignals über die Schnittstelle zu der Ladeeinrichtung, wobei das Steuereingabesignal eine über das Endgerät getätigte Steuereingabe repräsentiert, und wobei das Ansteuersignal unter Verwendung des Steuereingabesignals bereitgestellt wird. Die Steuereingabe wird beispielsweise mittels eines Tastendrucks oder mittels Sprachsteuerung bereitgestellt. Anders ausgedrückt wird das Haushaltgerät im Schritt 708 des Einlesens über einen Sprachbefehl geweckt und funktioniert beispielsweise als ein gekoppeltes Mikrofon, sodass die UI vollumfänglich in einem Endgeräte-Display zur Verfügung steht und Spracheingabe gekoppelt ist.

Weiterhin optional umfasst das Verfahren 700 einen Schritt 710 des Ausgebens eines Zustandssignals über die Schnittstelle an das Endgerät ansprechend auf das Kontaktsignal, um eine Anzeige eines Zustands (Reaktion) des Haushaltgeräts mittels des Endgeräts zu bewirken. Der Zustand wird beispielsweise als Reaktion des Haushaltgerätes auf das Kontaktsignal wahrgenommen. Ferner umfasst das Verfahren 700 einen Schritt 712 des Übertragens einer Ladeenergie zum induktiven Laden des Endgeräts über die Ladeschnittstelle ansprechend auf das Kontaktsignal.

In anderen Worten ausgedrückt wird beispielsweise der Ladestand oder weitere Funktionen des mobilen Endgerätes auf dem Display des Küchengerätes, das als Haushaltgerät beschrieben wurde, angezeigt. Eine Kommunikation erfolgt beispielsweise über das

Haushaltgerät und/oder über ein sogenanntes User Interface, das beispielsweise als Teil des Haushaltgerätes oder als Teil des Endgerätes realisiert ist. Daraus ergibt sich beispielsweise eine Verwendung von Gleichteilen. Auch eine Sprachbedienung oder Sprachsteuerung ist in dem hier beschriebenen Verfahren 700 nutzbar.

Figur 8 zeigt ein Blockschaltbild einer Steuereinheit 300 gemäß einem Ausführungsbeispiel für eine Haushaltvorrichtung. Die Steuereinheit 300 entspricht oder ähnelt dabei beispielsweise der in Figur 3 beschriebenen Steuereinheit 300 und ist beispielsweise für eine Haushaltvorrichtung nutzbar, wie sie in einer der Figuren 1 bis 6 beschrieben wurde. Die Steuereinheit 300 ist ausgebildet, um ein Verfahren zum Betreiben einer Haushaltvorrichtung anzusteuern oder durchzuführen wie es in Figur 7 beschrieben wurde. Die Steuereinheit 300 weist dazu eine Einleseeinheit 800 und eine Bereitstelleinheit 802 auf. Die Einleseeinheit 800 ist ausgebildet, um ein Kontaktsignal 804 einzulesen, das eine bestehende Kopplung des Endgerätes mit der Ladeeinrichtung repräsentiert. Die Bereitstelleinheit 802 ist ausgebildet, um ein Ansteuersignal 806 zum Ansteuern einer Gerätefunktion des Haushaltgerätes ansprechend auf das Kontaktsignal 804 bereitzustellen.

Gemäß diesem Ausführungsbeispiel ist die Einleseeinheit 800 weiterhin ausgebildet, um ein Steuereingabesignal 808 über die Schnittstelle zu der Ladeeinrichtung 106 einzulesen, wobei das Steuereingabesignal 808 eine über das Endgerät getätigte Steuereingabe repräsentiert. Lediglich optional weist die Steuereinheit 300 eine Ausgabeeinheit 810 auf, die ausgebildet ist, um ein Zustandssignal 812 über die Schnittstelle an das Endgerät ansprechend auf das Kontaktsignal 804 auszugeben, um eine Anzeige eines Zustands des Haushaltgeräts, das bedeutet eine Reaktion, mittels des Endgeräts zu bewirken. Weiterhin weist die Steuereinheit 300 gemäß diesem Ausführungsbeispiel eine Empfangseinheit 814 auf, die ausgebildet ist, um ein Bestätigungssignal 816 über eine Schnittstelle zu einer Eingabeeinrichtung 818 des Haushaltgerätes ansprechend auf eine Eingabeaufforderung, das bedeutet ansprechend auf das Ansteuersignal 806, wenn dieses die Eingabeaufforderung repräsentiert, zu empfangen. Das Bestätigungssignal 816 repräsentiert beispielsweiseeine getätigte Eingabe des Nutzers.

## Patentansprüche

1. Verfahren (700) zum Betreiben einer Haushaltvorrichtung (100), die ein Haushaltgerät (102) mit einer Ladeschnittstelle (104) und eine mit der Ladeschnittstelle (104) elektrisch verbundene Ladeeinrichtung (106) zum induktiven Laden eines Endgerätes (200) aufweist, wobei das Verfahren die folgenden Schritte umfasst:
Einlesen (702) eines Kontaktsignals (804) über die Ladeschnittstelle (104) oder eine weitere Schnittstelle (604) zu der Ladeeinrichtung (106), wobei das Kontaktsignal (804) eine bestehende Kopplung des Endgerätes (200) mit der Ladeeinrichtung (106) repräsentiert; und
Bereitstellen (704) eines Ansteuersignals (806) zum Ansteuern einer Gerätefunktion des Haushaltgerätes (102) ansprechend auf das Kontaktsignal (804) an eine Schnittstelle zu einer Anzeigeeinheit (112) des Haushaltsgerätes (102), wobei das Ansteuersignal (806) eine Eingabeaufforderung an der Anzeigeeinheit (112) an einen Nutzer repräsentiert.

2. Verfahren (700) gemäß Anspruch 1, wobei das Ansteuersignal (806) zum Überführen des Haushaltgerätes (102) aus einem Ruhezustand in einen Betriebszustand, und/oder zum Aktivieren einer Beleuchtungseinheit (203) des Haushaltgerätes (102), und/oder zum Deaktivieren einer Sicherungsfunktion des Haushaltgerätes (102) bereitgestellt wird.

3. Verfahren (700) gemäß einem der vorangegangenen Ansprüche, wobei das Kontaktsignal (804) Identitätsdaten zum Identifizieren des Endgerätes (200) umfasst, wobei im Schritt (704) des Bereitstellens das Ansteuersignal (806) unter Verwendung der Identitätsdaten bereitgestellt wird.

4. Verfahren (700) gemäß einem der vorangegangenen Ansprüche, mit einem Schritt (708) des Einlesens eines Steuereingabesignals (808) über die Ladeschnittstelle (104) oder die weitere Schnittstelle (604) zu der Ladeeinrichtung (106), wobei das Steuereingabesignal (808) eine über das Endgerät (200) getätigte Steuereingabe repräsentiert, und wobei das Ansteuersignal (806) unter Verwendung des Steuereingabesignals (808) bereitgestellt wird.

5. Verfahren (700) gemäß einem der vorangegangenen Ansprüche, mit einem Schritt (710) des Ausgebens eines Zustandssignals (812) über die Ladeschnittstelle (104) oder die weitere Schnittstelle (604) an das Endgerät (200) ansprechend auf das Kontaktsignal (804), um eine Anzeige eines Zustands des Haushaltgeräts (102) mittels des Endgeräts (200) zu bewirken.

6. Verfahren (700) gemäß einem der vorangegangenen Ansprüche, mit einem Schritt (706) des Empfangens eines Bestätigungssignals (816) über eine Schnittstelle zu einer Eingabeeinrichtung (818) des Haushaltgerätes (102) ansprechend auf die Eingabeaufforderung, wobei das Bestätigungssignal (816) eine getätigte Eingabe des Nutzers repräsentiert.

7. Verfahren (700) gemäß einem der vorangegangenen Ansprüche, mit einem Schritt (712) des Übertragens einer Ladeenergie zum induktiven Laden des Endgeräts (200) über die Ladeschnittstelle (104) ansprechend auf das Kontaktsignal (804).

8. Steuereinheit (300), die ausgebildet ist, um die Schritte (702, 704, 706, 708, 710, 712) des Verfahrens (700) gemäß einem der vorangegangenen Ansprüche in entsprechenden Einheiten (800, 802, 810, 814) auszuführen und/oder anzusteuern.

9. Computer-Programmprodukt mit Programmcode zur Durchführung des Verfahrens (700) nach einem der Ansprüche 1 bis 7, wenn das Computer-Programmprodukt auf einer Steuereinheit (300) gemäß Anspruch 8 ausgeführt wird.

10. Haushaltvorrichtung (100) mit den folgenden Merkmalen:
ein Haushaltgerät (102) mit einer Ladeschnittstelle (104);
eine Ladeeinrichtung (106) zum induktiven Laden eines mobilen Endgerätes (200), wobei die Ladeeinrichtung (106) elektrisch mit der Ladeschnittstelle (104) verbunden oder verbindbar ist; eine Anzeigeeinheit (112) und eine Schnittstelle zu der Anzeigeeinheit (112); und eine Steuereinheit (300) gemäß Anspruch 8.

## Claims

1. Method (700) for operating a domestic device (100) which comprises a household appliance (102) having a charging interface (104), and a charging apparatus (106) which is electrically connected to the charging interface (104) for inductively charging a terminal (200), wherein the method comprises the following steps:
reading in (702) a contact signal (804) via the charging interface (104) or a further interface (604) to the charging apparatus (106), wherein the contact signal (804) represents an existing coupling of the terminal (200) to the charging apparatus (106); and
providing (704) a control signal (806) for controlling an appliance function of the household appliance (102) in response to the contact signal (804) to an interface to a display unit (112) of the domestic appliance (102), wherein the control signal (806) represents an input request on the display unit (112) to a user.

2. Method (700) according to claim 1, wherein the control signal (806) is provided in order to transfer the household appliance (102) from a standby state to an operating state, and/or to activate a lighting unit (203) of the household appliance (102), and/or to deactivate a safety function of the household appliance (102).

3. Method (700) according to either of the preceding claims, wherein the contact signal (804) comprises identity data for identifying the terminal (200), wherein in the providing step (704), the control signal (806) is provided using the identity data.

4. Method (700) according to any of the preceding claims, comprising a step (708) of reading in a control input signal (808) via the charging interface (104) or the further interface (604) to the charging apparatus (106), wherein the control input signal (808) represents a control input executed via the terminal (200), and wherein the control signal (806) is provided using the control input signal (808).

5. Method (700) according to any of the preceding claims, comprising a step (710) of outputting a status signal (812) via the charging interface (104) or the further interface (604) to the terminal (200) in response to the contact signal (804) in order to cause a status of the domestic appliance (102) to be displayed by means of the terminal (200).

6. Method (700) according to any of the preceding claims, comprising a step (706) of receiving an acknowledgment signal (816) via an interface to an input apparatus (818) of the domestic appliance (102) in response to the input request, wherein the acknowledgment signal (816) represents an input executed by the user.

7. Method (700) according to any of the preceding claims, comprising a step (712) of transferring a charging energy for inductively charging the terminal (200) via the charging interface (104) in response to the contact signal (804).

8. Control unit (300) designed to run and/or control the steps (702, 704, 706, 708, 710, 712) of the method (700) according to any of the preceding claims in corresponding units (800, 802, 810, 814).

9. Computer program product comprising program code for carrying out the method (700) according to any of claims 1 to 7 when the computer program product is run on a control unit (300) according to claim 8.

10. Domestic device (100) comprising the following features:
a domestic appliance (102) having a charging interface (104);
a charging apparatus (106) for inductively charging a mobile terminal (200), wherein the charging apparatus (106) is or can be electrically connected to the charging interface (104); a display unit (112) and an interface to the display unit (112); and a control unit (300) according to claim 8.

## Revendications

1. Procédé (700) permettant de faire fonctionner un dispositif électroménager (100) présentant un appareil électroménager (102) comportant une interface de recharge (104) et un équipement de recharge (106) connecté électriquement à l'interface de recharge (104) et permettant la recharge par induction d'un terminal (200), dans lequel le procédé comprend les étapes suivantes :
lecture (702) d'un signal de contact (804) par l'intermédiaire de l'interface de recharge (104) ou d'une autre interface (604) vers l'équipement de recharge (106), dans lequel le signal de contact (804) représente un couplage existant entre le terminal (200) et l'équipement de recharge (106) ; et
fourniture (704) d'un signal de commande (806) pour la commande d'une fonction de l'appareil électroménager (102) en réponse au signal de contact (804) au niveau d'une interface vers une unité d'affichage (112) de l'appareil électroménager (102), dans lequel le signal de commande (806) représente une demande d'entrée destinée à un utilisateur sur l'unité d'affichage (112).

2. Procédé (700) selon la revendication 1, dans lequel le signal de commande (806) est fourni pour le passage de l'appareil électroménager (102) d'un état de veille à un état de fonctionnement, et/ou pour l'activation d'une unité d'éclairage (203) de l'appareil électroménager (102), et/ou pour la désactivation d'une fonction de sécurité de l'appareil électroménager (102).

3. Procédé (700) selon l'une des revendications précédentes, dans lequel le signal de contact (804) comprend des données d'identité permettant d'identifier le terminal (200), dans lequel, à l'étape (704) de fourniture, le signal de commande (806) est fourni à l'aide des données d'identité.

4. Procédé (700) selon l'une des revendications précédentes, comportant une étape (708) de lecture d'un signal d'entrée de commande (808) par l'intermédiaire de l'interface de recharge (104) ou de l'autre interface (604) vers l'équipement de recharge (106), dans lequel le signal d'entrée de commande (808) représente une entrée de commande effectuée par l'intermédiaire du terminal (200), et dans lequel le signal de commande (806) est fourni à l'aide du signal d'entrée de commande (808).

5. Procédé (700) selon l'une des revendications précédentes, comportant une étape (710) d'émission d'un signal d'état (812) par l'intermédiaire de l'interface de recharge (104) ou de l'autre interface (604) vers le terminal (200) en réponse au signal de contact (804) afin de provoquer un affichage d'un état de l'appareil électroménager (102) au moyen du terminal (200).

6. Procédé (700) selon l'une des revendications précédentes, comportant une étape (706) de réception d'un signal de confirmation (816) par l'intermédiaire d'une interface vers un équipement d'entrée (818) de l'appareil électroménager (102) en réponse à la demande d'entrée, dans lequel le signal de confirmation (816) représente une entrée effectuée par l'utilisateur.

7. Procédé (700) selon l'une des revendications précédentes, comportant une étape (712) de transmission d'une énergie de recharge pour la recharge par induction du terminal (200) par l'intermédiaire de l'interface de recharge (104) en réponse au signal de contact (804).

8. Unité de commande (300) configurée pour exécuter et/ou commander les étapes (702, 704, 706, 708, 710, 712) du procédé (700) selon l'une des revendications précédentes dans des unités (800, 802, 810, 814) correspondantes.

9. Produit-programme d'ordinateur comportant un code de programme pour la réalisation du procédé (700) selon l'une des revendications 1 à 7 lorsque le produit-programme d'ordinateur est exécuté sur une unité de commande (300) selon la revendication 8.

10. Dispositif électroménager (100) comportant les caractéristiques suivantes :
un appareil électroménager (102) comportant une interface de recharge (104) ;
un équipement de recharge (106) permettant la recharge par induction d'un terminal (200) mobile, dans lequel l'équipement de recharge (106) est connecté ou peut être connecté électriquement à l'interface de recharge (104) ; une unité d'affichage (112) et une interface vers l'unité d'affichage (112) ; et une unité de commande (300) selon la revendication 8.
